# EUROPEAN PATENT APPLICATION

(11) **EP 4 043 418 A1**
(43) Date of publication of application: **17.08.2022**
(21) Application number: 21156865.4
(22) Date of filing: 12.02.2021
(51) Int. Cl.: C04B 35/58, C22C 1/04, C22C 1/05, C22C 29/00, C22C 29/14

(54) **COMPOSITE MATERIAL, SINTERED BODY, TOOL, AND METHOD**

(71) Applicant: Hilti Aktiengesellschaft, 9494 Schaan (LI)
(72) Inventor: Moseley, Steven, 6820 Nenzing-Gurtis (AT); Gonzalez Polvorosa, Nerea, 9470 Buchs (CH); Sanchez Moreno, Jose Manuel, 20018 San Sebastián (ES); Soria Biurrun, Tomás, 31006 Pamplona (ES); Navarrete Cuadrado, Jazmina, 20017 San Sebastián (ES); Lozada Cabezas, Lorena, 20011 San Sebastián (ES)
(74) Representative: Hilti Aktiengesellschaft Corporate Intellectual Property

(57) **Abstract**

The invention concerns a composite material for producing a hard metal, comprising a first material and a second material, wherein the first material comprises a tungsten boride, and the second material comprises a titanium aluminide. Further aspects of the invention are a sintered body (28), a tool (10), and a method for producing a sintered body (28) or a tool (10).

## Description

The present invention relates to a composite material comprising a first and a second material, and, in particular, to a composite material for producing a hard metal.

A hard metal usually consists of hard phase materials and at least one binder. Typical hard phase materials are hard constituents of carbides or nitrides, e.g. WC or TiC. A typical metallic binder is cobalt. Hard metals are useful in applications demanding for high hardness and high toughness. Examples of areas of application are drill bits, in particular percussive drill bits, sawblade teeth, or the like.

Albeit the use of cobalt as binder is well-proven in hard metal manufacturing, it has been discovered that cobalt is, nonetheless, toxicologically questionable.

Therefore, it is an object of the present invention to provide alternatives to cobalt-based hard metals. In particular, it is an object of the present invention to provide a cobalt-free composite material for producing a hard metal and a method for producing a cobalt-free body that provide high hardnesses or toughnesses. It is a further object of the invention to provide a cobalt-free body and a cobalt-free tool having high hardnesses or toughnesses.

This is achieved in a number of aspects of the present invention, in which a first aspect is a **composite material,** comprising a first material and a second material, wherein the first material comprises a tungsten boride, and the second material comprises a titanium aluminide.

Thus, a basic idea behind the invention is to provide a composite material comprising the tungsten boride, that is generally capable of providing material properties favorable for the previously named areas of application, in particular high hardness and / or high toughness.

The tungsten boride is then combined with the titanium aluminide, preferably using the titanium aluminide as metallic binder.

A body, for example a tool for a handheld power tool or for a mobile construction robot, may be manufactured from the composite material by sintering. A green body to be sintered can thus easily be formed, if the composite material is in the form of a powder mixture.

The highest tungsten boride phases offer particularly attractive mechanical properties. Thus, in a preferred embodiment, the first material comprises WBₚ, with 2<=p<=6, in particular 4<=p<=5. Particularly preferred first materials result from p=2 (WB₂), p=4 (WB₄), p=5 (WB₅), p=4.2 (WB_{4.2}), in particular p=4.18 (WB_{4.18}), p=4.9 (WB_{4.9}), in particular p=4.86 (WB_{4.86}), or p=5.7 (WB_{5.7}), in particular p=5.71 (WB_{5.71}).

The first material, in particular the tungsten boride comprised therein, may amount to at least 50 percent, preferably at least 65 percent, by volume of the composite material. It may be limited to at most 85 percent, preferably to at most 75 percent.

A preferred second material may comprise TiAl₃.

The second material, in particular the titanium aluminide comprised therein, may amount to at least 5 percent by volume of the composite material. It may be limited to at most 12 percent. In a particularly preferred embodiment the second material, in particular the titanium aluminide comprised therein, may amount to at most 10 percent. Preferably, the second material may thus limit the formation of unfavorable aluminium borides, in particular of aluminium diboride. TiAl₃ additions may help in stabilizing non-boride binder phases via Ni₃(Ti,Al) type intermetallics. Such additions may be carefully calculated to avoid the formation of AlB₂ borides.

The composite material may be significantly improved in sinterability, if the composite material comprises nickel as a third material.

As a further option for improving sinterability, the third material may additionally or alternatively comprise iron. The presence of iron in the binder phase may enhance a decomposition of tungsten borides, e. g. WB₄ to WB₂. Furthermore, it may also hinder densification.

The third material, in particular nickel comprised therein, may amount to 2 to 36 percent by volume of the composite material. In particularly preferred embodiments, the amount of nickel is between 23 and 28 percent.

Furthermore, the composite material may further comprise a fourth material, the fourth material comprising at least one of titanium, zirconium, zirconium carbide, aluminium, magnesium, or a material capable to form an intermetallic phase, the intermetallic phase containing at least one of nickel, iron, titanium, magnesium, or aluminium. Examples of intermetallic phases are Ni-AI, Ni-Ti, Ni-Al-Ti, Ni-Al-Ti-Cr, Ni-Al-Fe, Ti-Al, Ti-Al-Nb, Ti-Al-Mo, Ti-Al-V, Ti-Nb, or Al-Mg- intermetallics.

Thus, the composite material comprises materials as previously described as "first material" and "second material", whereas it may or may not comprise at least one of a material as previously described as "third material" or a material as previously described as "fourth material".

Apart from the ingredients of the composite material, it has been found out that also the manufacturing process may play an important role in regard to material properties of the sintered body.

At least one of the first, the second, the third, or the fourth material may be milled using a planetary ball mill. As an alternative, at least one of the materials may be milled using a ball milling shaker.

Furthermore, balls used for milling at least one of the first, the second, the third, or the fourth material may comprise at least one of stainless steel, titanium diboride or a composition of tungsten carbide and cobalt, thus WC-Co balls.

In general, milling with balls made of tungsten carbide and cobalt and using a planetary ball mill may lead to particularly favorable results with the sintered body having higher homogeneity and the milled material providing better wetting and less exudation during pressure treatments after sintering. Also, more gamma prime phases may be provided after sintering in materials milled with WC-Co balls.

In a particularly preferred class of embodiments according to the invention the first material amounts to 65 to 70 percent by volume of the composite material, the second material amounts to 5 to 8 percent by volume, and the third material amounts to 24 to 28 percent by volume of the composite material.

An example of such an embodiment is a composite material #12 comprising 70 percent by volume WB₄ as first material, 24 percent by volume of Ni as third material and 6 percent TiAl₃ as second material. The materials may be milled in a planetary ball mill using balls made of WC-Co or TiB₂. The composite material #12 provides both hardness and toughness after sintering.

A further example of such an embodiment is a composite material #20 comprising 65 percent by volume WB₄ as first material, 27 percent by volume of Ni as third material and 8 percent TiAl₃ as second material. Preferably, the materials may be milled in a planetary ball mill using balls made of WC-Co. The composite material #20 provides a good transverse rupture strength (in the following: TRS).

The composite materials presented may be used in sawing tools, e. g. for sawblade teeth, in particular for sawblades of circular saws, for drilling tools, e. g. for drill bit heads, or for chiseling tools, e. g. for tips of chisel bits.

The composite material may be configured to be used with an additive manufacturing method, in particular with 3D-printing, preferably with 3D-printing via binder jetting or solvent-jetting. Hence, preferably, the composite material may be in form of a powder, in particular in form of a powder mixture. It may comprise a plurality of granules. The average size of the granules may be less than or equal to 100 µm, preferably less than or equal to 50 µm. Particularly preferably, the average size of the granules may be less than 1µm, for example between 50 nm and 500 nm.

In one embodiment, the composite material may comprise first granules each of which being made of at least two different materials. In particular, the first granules may comprise at least the first and the second material. Additionally, or in the alternative, the first granules may comprise at least one of the third or the fourth material. The first granules may comprise a granule binder binding the at least two different materials to one another and at least within each of the first granules.

Furthermore, the composite material may comprise second granules each of which comprising only one of the first, the second, the third, or the fourth material. In a particularly preferred embodiment, the composite material is a powder mixture comprising a mixture of such second granules.

A further aspect of the invention is a **sintered body** manufactured from the previously described composite material.

The sintered body may have a layered structure. It may be manufactured by an additive manufacturing method, in particular by a layer-by-layer process. The additive manufacturing method may be a 3D-printing method, for example a binder-jetting or a solvent-on-granules-jetting 3D-printing method.

The sintered body may be characterized in that it has a toughness according to a K1c value of at least 5 MPa m^{1/2}.

Furthermore, it may have a Vicker's hardness (HV10) of at least 1400 kg mm⁻².

Another aspect of the invention is a **tool** for a mobile power tool, for example a tool for a handheld power tool or a tool for a construction robot, may comprise such a sintered body. The tool may be a sawing, drilling, or chiseling tool. For example, the tool may be a sawblade having teeth made by sintering a green body of the previously described composite material. As a further example, the tool may be a percussive drill bit having a drill bit head comprising the composite material.

Manufacturing tools or other bodies made of hard metal may be based on powder-metallurgical processes. A green body may be made from the composite material. The green body can be shaped to a form derived from a form of the tool or body to be manufactured. The green body may be sintered. The sintering may comprise a liquid phase sintering, i.e. a sintering at a temperature above the liquidus of the second material or the metallic binder, so that the first and the second material undergo metallurgical reaction, thus solidifying the green body into a brown body.

Thus, a further aspect of the invention concerns a method for producing the sintered body or for producing the tool, the method comprising the steps:
a. milling and mixing the first material and the second material, wherein the first and the second materials are chosen and milled such that the previously described composite material is obtained;
b. forming a green body from the composite material, preferably by an additive manufacturing method; and
c. sintering the green body to form a brown body.

The green body may be formed by an additive manufacturing method, in particular using a layer-by-layer process. The additive manufacturing method may be a 3D-printing method, for example a binder-jetting or a solvent-on-granules-jetting 3D-printing method.

A particular advantage is that this method is scalable to industrial scales. A further optimization of the method is possible by post-processing of the brown body. In particular and since often required, hard metals for tools for the above-mentioned applications should have a low porosity.

As the porosity mainly results from the transition of the green body into the brown body, the porosity may be reduced, if the method comprises a further step d of pressing, in particular of hot pressing or hot isostatic pressing.

Furthermore, in a preferred variant of the method at least one of the first, the second, the third or the fourth material may be milled using a planetary ball mill, and particularly preferably using balls comprising a material composition of tungsten carbide and cobalt.

In case that boron is over-stoichiometric, a boron getter, in particular at least one of titanium, zirconium, titanium carbide, zirconium carbide, aluminium, magnesium, or an aluminium magnesium intermetallic, may be added such that free boron and boron oxides present are at least partially, preferably fully, captured. This addition may also further stabilize the metallic phase. For this, also the second material may be chosen accordingly.

Another aspect of the invention is the **use of the composite material** as described previously for producing a tool for a mobile power tool.

The tool may be, for example, a drill bit, a core drill bit, a chisel or a saw blade. The composite material may in particular be used for producing a saw blade tooth, in particular for forming a cutting edge of a saw blade tooth.

The Vickers hardness of the HV10 type may be measured in accordance with the requirements of the DIN EN ISO 6507-1 standard of, for example, March 2006. In particular, the standard may provide for the following measuring setup. A pyramidal indenter has an angle of 136 degrees at the tip. The indenter is pressed into the surface with a force of approximately 98 Newtons. The time of action ranges between 10 seconds and 30 seconds. The ratio of the test force to the area of the indentation is the hardness value.

The invention will be described further, by way of example, with reference to the accompanying drawings which illustrate preferred embodiments thereof, it being understood that the following description is illustrative of and not limitative of the scope of the invention. The features shown there are not necessarily to be understood to scale and are presented in such a way that the special features of the invention are clearly visible. The various features may be realized individually or in combination in any desired way in variants of the invention.

### In the drawings:

- Figure 1: shows a tool with a sintered body,
- Figure 2: shows an electron image of a sintered body, and
- Figure 3: shows a flowchart of a method for producing a hard metal.

Same reference signs are used for functionally equivalent elements in all figures.

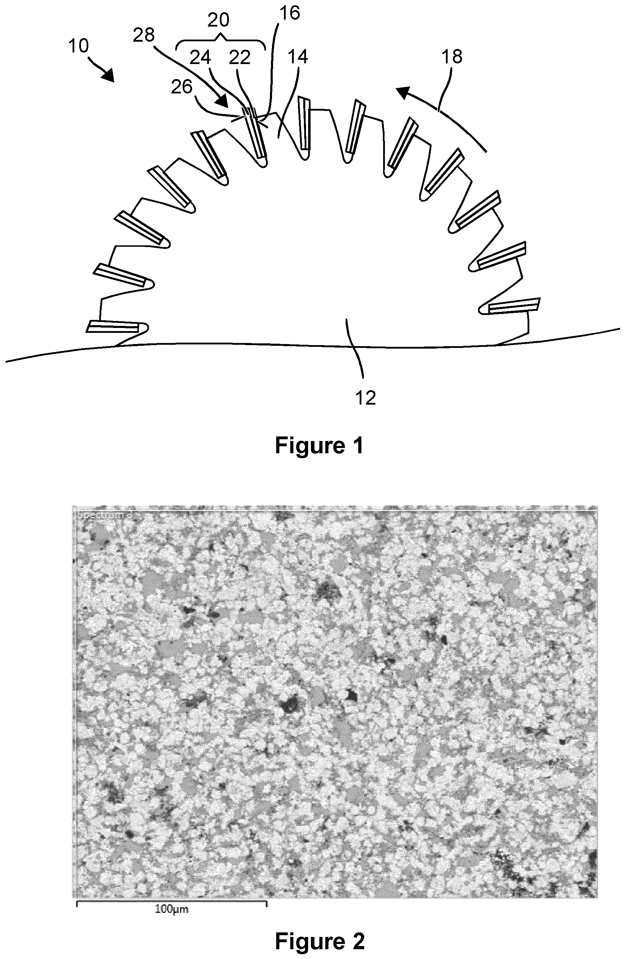

**Figure 1** schematically shows a detail of a tool **10.** The tool 10 is a disk-shaped saw blade.

It has a disk-shaped main body **12.** The main body 12 comprises a low-alloy steel. The main body has several tooth recesses **14,** which are disposed along the circumference of the main body 12. Tooth recesses 14 respectively have facets **16** pointing in a direction of rotation **18** of the tool 10. Wear-resistant cutters **20** are welded onto the respective facets 16.

The wear-resistant cutters 20 may comprise two parts each: a base **22** and a working portion **24.** Each of the working portions 24 has a cutting edge **26** and points in the direction of rotation 18.

At least one of the bases 22 or one of the working portions 24 is sintered. In particular, the bases 22 and / or the working portions 24, in the present example both parts 22 and 24, form sintered bodies **28.** The sintered bodies 28 are made of hard metal. Preferably, both parts 22 and 24 are manufactured together.

In the following, composite materials for producing the sintered bodies 28 are described.

The composite materials as proposed according to the invention comprise a first material and a second material, wherein the first material is a tungsten boride and the second material is a titanium aluminide. The second material serves as a metallic binder for the first material during sintering. Furthermore, the composite materials comprise a third material, the third material improving sinterability of the respective composite material.

**Table 1. Examples of composite materials**

| **ID** | **First material (vol %)** | **Second material (vol %)** | **Third material (vol %)** | | **Preprocessing** |
|---|---|---|---|---|---|
| | **WB₄** | **TiAl₃** | Ni | Fe | |
| **#1** | 80.8 | 5.5 | 13.7 | | Planetary ball mill, SS balls |
| **#2** | 77.0 | 11.3 | 3.2 | 8.5 | Planetary ball mill, SS balls |
| **#3** | 80.8 | 5.5 | 3.8 | 9.9 | Planetary ball mill, SS balls |
| **#5** | 77.0 | 11.3 | 3.2 | 8.5 | Ball milling shaker, TiB₂ balls |
| **#11** | 70.1 | 10.3 | 2.9 | 7.8 | Ball milling shaker, TiB₂ balls |
| **#12** | 70.0 | 5.5 | 24.5 | | Planetary ball mill, TiB₂ or WC-Co balls |
| **#18** | 54.7 | 9.8 | 35.5 | | Planetary ball mill, WC-Co balls |
| **#19** | 56.9 | 7.6 | 35.5 | | Planetary ball mill, WC-Co balls |
| **#20** | 65.1 | 7.6 | 27.3 | | Planetary ball mill, WC-Co balls |

**Table 1** lists a selection of preferred composite materials.

Prior to sintering, the composite materials are in the form of powder mixtures, in order to enable sintering.

As can be drawn from the last column of Table 1, different pre-processing techniques have been applied to each of the composite materials. In particular, they have been milled either using a planetary ball mill or a ball milling shaker.

The balls used for milling were either made of stainless steel (in Table 1 noted as "SS"), TiB₂ or WC-Co.

Best results were obtained by using a planetary ball mill and using balls made of WC-Co, providing materials of high homogeneity and good wetting of the first material, while avoiding or at least minimizing contamination of the powder mixture. Also, sintered bodies comprise more gamma prime phases than after alternative pre-processing methods.

Whilst Table 1 lists specific combinations of materials and pre-processing methods as examples, other combinations are also possible. For example, preferred embodiments of the invention also comprise the combinations of materials according to Table 1, pre-processed in ways other than according to Table 1. In particularly preferred embodiments the pre-processing may make use of a planetary ball mill in combination with WC-Co balls.

Furthermore, tungsten tetraboride is used as first material in the examples according to Table 1.

TiAl₃ is used as second material in the examples according to Table 1. Materials with amounts of the second material TiAl₃ of less than approximately 10 percent by volume have shown a reduced or no tendency to form aluminum diborides.

In regard to the third material, sinterability is even more improved by high amounts of nickel as in composite materials #1, and #12 to #20.

**Table 2. Hardness values for selected composite materials**

| **ID** | **HV10 (kg/mm²)** | | |
|---|---|---|---|
| | **HIP 1100 °C/ 1500 bar Ar/1h h** | **HIP 1100 °C/ 1500 bar Ar/ 5 min** | **HP 1100 °C/ 350 bar Ar/5 min** |
| #1 | 2065 ± 30 | - | - |
| #12 | 1802 ± 44 | 1774 ± 77 | 1702 ± 47 |
| #18 | 1533 ± 20 | 1492 ± 29 | - |
| #19 | 1565 ± 28 | 1513 ± 40 | - |
| #20 | 1678 ± 50 | 1684 ± 64 | - |

**Table 2** lists Vicker's hardness values for some of the above-mentioned selection of composite materials depending on post-processing methods applied. As post-processing after sintering, the composite materials have either undergone hot isostatic pressing (in Table 2: HIP) or hot pressing (in Table 2: HP), at various temperatures, pressures and for various durations in argon atmospheres.

As can be drawn from Table 2, the composite materials #1, and #12 to #20 provide hardnesses that are particularly suitable for sawing applications but may also be suitable for other applications like drilling.

The highest hardness values are provided by composite material #1, followed by composite material #12.

With a fracture toughness K1c of approximately 9 MPa m^{1/2} after hot pressing at 1100°C with 350 bar during 5 minutes in an argon atmosphere, composite material #12 provides, furthermore, for balanced mechanical properties, that particularly balance between hardness and toughness.

**Table 3. Transverse rupture strengths of selected composite materials.**

| **ID** | **TRS (MPa)** | | |
|---|---|---|---|
| | **HP** | **HIP** | |
| | **1100°C/5 min** | **1100 °C/1500 bar** | |
| | | **Ar/ 1h** | **Ar / 5min+** |
| 12 | 349 ± 73 | 393 ± 90 | 371 ± 50 |
| 18 | - | 419 ± 70 | 359 ± 40 |
| 20 | - | 882 ± 90 | 708 ± 60 |

**Table 3** lists transverse rupture strength (in the following: TRS) values for composite materials #12, #18, and #20. Thus, composite material #20 provides best TRC values within this selected group of composite materials after hot isostatic pressing, in particular if HIP has been applied to the composite material for a long or longer duration, namely for 1h.

**Figure 2** shows an electron image of a cross-section of a post-processed sintered (brown) body made of composite material #20.

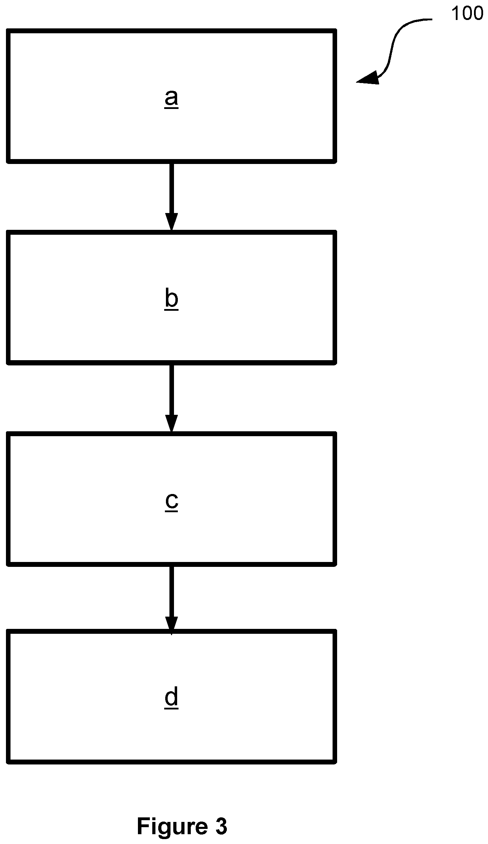

As can be estimated from the black areas within Figure 3, and according to an additional EDS analysis, Boron, in particular Boron-containing compounds like Boron-oxides, is over-stoichiometrically present in relation to the tungsten. In particular, a tungsten to boron ratio of approximately 6.6 has been found.

Such an over-stoichiometry may happen, if, for example, the primary materials, in particular the first material, comprises boron or boron-compounds in stoichiometry-exceeding amounts.

Thus, according to the invention, the composite materials may be added a fourth material (not shown in Table 1). The fourth material may comprise at least one of titanium, zirconium, zirconium carbide, magnesium, aluminium, or, generally speaking, a material capable to form an intermetallic phase, the intermetallic phase containing at least one of nickel, iron, titanium, aluminium, or magnesium.

As, for example, titanium, zirconium, their respective carbides, or aluminium magnesium intermetallics may act as boron getters during sintering, they may be added to the powder mixture in quantities corresponding to the amount of boron excess, so as to capture free boron or boron oxides during sintering.

Furthermore, as further fourth material, aluminium, for example, may be added to additionally stabilize metallic phases.

The percentages according to Table 1 add up to 100% or to at least substantially 100%, though the percentages may be understood as relative proportions instead of absolute amounts. In particular, when adding a further material, for example the fourth material, the total amount may exceed 100%.

X-ray diffraction measurements of the sintered body made of composite material #20 have shown that, apart from WB₄, other borides, such that WB₂, W₂B₅ and/or nickel borides, may be present in the microstructure of the sintered body.

Also, a Ni₃Ti phase may also be present. This phase may dissolve aluminium and form a type of gamma prime phase.

**Figure 3** shows a flowchart of a method **100** for producing a sintered body 28 (see figure 1) or for producing a tool 10 (see figure 1), the method 100 comprising the steps:
**a.** milling and mixing a first material and a second material, wherein the first and the second materials are chosen such that a composite material as described previously is obtained;
**b.** forming a green body from the composite material; and
**c.** sintering the green body to form a brown body.

The sintered brown body may then constitute the sintered body 28 to be produced.

In the alternative, or additionally, the method 100 may comprise a further step **d** of treating the brown body by hot pressing or by hot isostatic pressing. Thus, the sintered body 28 may result from the brown body after pressing.

In a preferred variant of the method 100, the pressing according to step d may be combined with the sintering according to step c of the method 100.

The milling and mixing according to step a may take place according to several different milling procedures.

In general, ethanol may be used as liquid for milling. In particular, approximately 100 cm³ to 150 cm³, preferably 130 cm³, ethanol per 50 g of powder mixture may be added.

Also, a pressing aid, for example paraffin, may be added, in particular amounting to 1.5 to 2 wt.%, preferably 1.8 wt.%, with respect to the powder content.

In a variant of the milling procedure according to step a, the composite material is milled using a planetary ball mill at 100 rpm for a total of 5 hours. After 4 hours of milling in ethanol, the paraffin is added.

For a total powder mixture mass of 50 grams, the milling vessel volume is 250 cm³. The ratio of the composite material to the milling media may be 1:5 in respect to weight.

The milling media may comprise 175 g WC-Co balls having a diameter of 12 mm and 75 g of WC-Co balls having a diameter of 6 mm. The WC-Co balls may have 10 wt.% of Co.

In a further variant of the milling procedure according to step a, the composite material may be milled using a ball milling shaker, e. g. Turbula T2C shaker, at 46 rpm for a total of 5 hours. Again, after 4 hours of milling in ethanol, the paraffin is added.

For a total powder mixture mass of 50 grams, the milling vessel volume is also 250 cm³. As with the previously described variant, the ratio of the composite material to the milling media may be 1:5 in respect to weight.

The milling media may comprise 140 g 316L stainless steel balls having a diameter of 12 mm and 110 g of 316L stainless steel balls having a diameter of 6 mm. Alternatively, in particular for minimizing powder contamination, the milling media may comprise 270 g titanium diboride balls having a diameter of 12 mm.

After milling and mixing, the composite material is dried. The drying can take place for 90 min in a paraffin bath at 80°C.

Subsequently to the drying, the composite material is sieved for approximately 15 min with openings of 500 µm, 300 µm, and 100 µm.

Furthermore, the composite material is pressed at 100-150 MPa using a uniaxial press having punches and dies of hardened steel for two geometries, in particular, circular sections with diameters of 6 mm and 16 mm, or rectangular sections with 20 mm x 7 mm.

In a variant of the method 100, the sintering according to the step c takes place using a furnace having graphite crucibles and heating elements and using alumina trays. The heating rate is adjusted to 10 K / min in a vacuum of about 10⁻² mbar. At 450 °C a dewaxing plateau is maintained for 20 min. At 1300 °C, an argon atmosphere of 100 mbar is introduced. Sintering takes place at 1500 °C with a dwelling time of 1 h. Subsequently, the brown body is cooled down with a cooling rate of 10 K/ min.

In another variant of the method 100, the sintering according to the step c is combined with hot isostatic pressing according to the step d. Graphite crucibles are used together with hexagonal boron nitride powder as sintering barrier. The heating rate is 10 K / min in a vacuum of 10⁻² mbar.

Pressing is started at 900 °C with a pressure of up to 150 MPa of argon. At 450 °C a dewaxing plateau is maintained for 20 min. At 1300 °C, an argon atmosphere of 100 mbar is introduced. The sintering temperature ranges from 1000 °C to 1350 °C with a dwelling time of 5 min up to 1h. Subsequently, the brown body is cooled down with a cooling rate of 65 K / min.

In a further variant of the method 100, the sintering according to the step c is combined with hot isostatic pressing according to the step d using a graphite die and punches. The heating rate is set to 60 K / min in a vacuum of 10⁻¹ mbar.

Starting from 550 °C argon is introduced and pressing takes place at approximately 35 MPa. The sintering temperature ranges from 1100 °C to 1250 °C with a dwelling time of 3 min up to 5 min. Subsequently, the brown body is cooled down.

## Claims

1. **A composite material** for producing a hard metal, comprising a first material and a second material, wherein
- the first material comprises a tungsten boride, and
- the second material comprises a titanium aluminide.

2. A composite material according to claim 1, **characterized in that** the composite material is in the form of a powder mixture.

3. The composite material according to one of the preceding claims, **characterized in that** the first material comprises WBₚ, with 2<=p<=6.

4. The composite material according to one of the preceding claims, **characterized in that** the first material amounts to at least 50 percent, preferably at least 65 percent, by volume of the composite material.

5. The composite material according to one of the preceding claims, **characterized in that** the second material comprises TiAl₃.

6. The composite material according to one of the preceding claims, **characterized in that** the second material amounts to at least 5 percent, and preferably to at most 12 percent, particularly preferably to at most 10 percent, by volume of the composite material.

7. The composite material according to one of the preceding claims, **characterized in that** it further comprises a third material, the third material comprising at least one of nickel or iron.

8. The composite material according to one of the preceding claims, **characterized in that** the third material amounts to 2 to 36 percent by volume of the composite material.

9. The composite material according to one of the preceding claims, **characterized in that** it further comprises a fourth material, the fourth material comprising at least one of titanium, zirconium, zirconium carbide, aluminium, magnesium, or a material capable to form an intermetallic phase, the intermetallic phase containing at least one of nickel, iron, titanium, magnesium, or aluminium.

10. **A sintered body** (28) manufactured from the composite material according to one of the preceding claims.

11. The sintered body according to the preceding claim, **characterized in that** the sintered body (28) has a toughness K1c of at least 5 MPa m^{1/2}.

12. The sintered body according to one of the claims 13 or 14, **characterized in that** the sintered body (28) has a hardness HV10 of at least 1400 kgmm⁻².

13. **A tool** (10) for a mobile power tool, for example a tool (10) for a handheld power tool or a tool for a construction robot, comprising the sintered body (28) according to one of the claims 10 to 12.

14. **A method** (100) for producing a sintered body (28) according to one of the claims 10 to 12 or for producing a tool (100) according to the preceding claim, the method (100) comprising the steps:
a. milling and mixing a first material and a second material, wherein the first and the second materials are chosen such that a composite material according to one of the claims 1 to 9 is obtained;
b. forming a green body from the composite material, preferably by an additive manufacturing method; and
c. sintering the green body to form a brown body.

15. The method according to the preceding claim, **characterized in that** it comprises a further step d of pressing, in particular of hot pressing or hot isostatic pressing.

16. The method according to one of the claims 14 or 15, **characterized in that** the milling according to step a of the method (100) is done using a planetary ball mill, and preferably using balls comprising a material composition of tungsten carbide and cobalt.

17. The method according to one of the claims 14 to 16, **characterized in that** in case that boron is over-stoichiometric, a boron getter, in particular at least one of titanium, zirconium, titanium carbide, zirconium carbide, aluminium, magnesium, or an aluminium magnesium intermetallic, is added such that free boron and boron oxides present are at least partially captured.
